# EUROPÄISCHE PATENTSCHRIFT

(11) **EP 3 375 673 B1**
(45) Veröffentlichungstag und Bekanntmachung des Hinweises auf die Patenterteilung: **12.05.2021**
(21) Anmeldenummer: 18160885.2
(22) Anmeldetag: 09.03.2018
(51) Int. Cl.: B60R 25/24

(54) **SICHERHEITSVERFAHREN FÜR EIN SICHERHEITSSYSTEM EINES FAHRZEUGES**
SAFETY METHOD FOR A SAFETY SYSTEM OF A VEHICLE
PROCÉDÉ DE SÉCURITÉ POUR UN SYST?ME DE SÉCURITÉ D'UN VÉHICULE

(30) Priorität: 13.03.2017 DE 102017105259
(43) Veröffentlichungstag der Anmeldung: 19.09.2018
(73) Patentinhaber: Huf Hülsbeck & Fürst GmbH & Co. KG, 42551 Velbert (DE)
(72) Erfinder: Oberbeckmann, Kai Magnus, 42105 Wuppertal (DE)
(74) Vertreter: Bals, Rüdiger

(56) Entgegenhaltungen:
- EP-A1- 3 335 942
- WO-A1-2008/068091
- WO-A1-2015/084852
- WO-A1-2016/102887
- WO-A1-2018/103939
- WO-A2-2015/032956
- DE-A1-102013 224 330

## Beschreibung

Die vorliegende Erfindung betrifft ein Sicherheitsverfahren für ein Sicherheitssystem eines Fahrzeuges nach dem Oberbegriff des unabhängigen Verfahrensanspruchs. Ferner bezieht sich die Erfindung auf ein Sicherheitssystem nach dem Oberbegriff des unabhängigen Vorrichtungsanspruchs.

Es ist aus dem Stand der Technik bekannt, dass ein tragbares Zugangsgerät, bspw. ein Smartphone oder ein ID-Geber, zur Aktivierung einer sicherheitsrelevanten Funktion bei einem Fahrzeug genutzt werden kann. Eine solche Funktion ist bspw. die Gewährung eines Zugangs bei dem Fahrzeug oder eine Autorisierung eines Motorstarts. Hierzu kann ein Sicherheitssystem des Fahrzeuges vorgesehen sein, welches bspw. eine Datenübertragung zwischen dem Fahrzeug und dem Zugangsgerät durchführt und/oder auswertet. Durch die

Auswertung der Datenübertragung kann bspw. ein Abstand des Zugangsgeräts zum Fahrzeug gemessen werden und/oder eine Annäherung des Zugangsgeräts detektiert werden. Bspw. kann die Aktivierung der sicherheitsrelevanten Funktion nur dann erfolgen, wenn sich das Zugangsgerät in der Nähe zum Fahrzeug befindet. Dies ermöglicht bspw. die Bereitstellung eines passiven Zugangssystems (Keyless-Entry-Systems).

Herkömmliche Sicherheitssysteme nutzen dabei eine "verbindungsbehaftete Datenübertragung", um die Sicherheit bei der Aktivierung der Funktion zu gewährleisten. Bspw. kann dann beim Verbindungsaufbau eine Authentifizierung erfolgen. Hierbei hat sich allerdings der Nachteil herausgestellt, dass eine solche Datenübertragung, insbesondere der Verbindungsaufbau, nur aufwendig, unflexibel und kompliziert durchgeführt werden kann. Ggf. kann es auch eine technische Herausforderung sein, bei einer verbindungsbehafteten Datenübertragung Verbindungsabbrüche und/oder Verbindungsfehler hinreichend zu beschränken.

Grundsätzlich kann für eine Datenübertragung auch eine "verbindungslose Kommunikation" genutzt werden. Die Nutzung einer verbindungslosen Datenübertragung hat allerdings den Nachteil, dass die übertragenen Datenpakte nicht ohne Weiteres hinreichend vor Manipulation geschützt sind und üblicherweise an alle gerichtet sind. Mit anderen Worten ist die Integrität der übertragenen Daten ggf. nicht ausreichend sichergestellt oder nur technisch aufwendig zu gewährleisten. Bei passiven Sicherheits- insbesondere Zugangssystemen, welche die Empfangsleistung bei der Datenübertragung als Anhaltspunkt für die Annäherung eines Zugangsgerätes nutzen, kann dies dazu führen, dass das falsche Gerät für eine Abstandsmessung erfasst wird

DE 10 2013 224 330 A1 offenbart ein Verfahren und System zum Erkennen von Annäherung eines Endgeräts an ein Fahrzeug, das auf der Information über eine Signalstärke basiert, die über einen Bluetooth-Sendekanal von geringer Energie (BLE) empfangen wird.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine zuverlässigere und/oder sicherere Authentifizierung und/oder Abstandsmessung und/oder Datenübertragung bei einem Sicherheitssystem, insbesondere Zugangssystem, eines Fahrzeuges bereitzustellen. Vorzugsweise soll dabei die Möglichkeit, sich via Zugangsgerät beim Fahrzeug (insbesondere kontaktlos / per Funk) zu authentifizieren, vereinfacht und verbessert werden.

Die voranstehende Aufgabe wird gelöst durch ein Sicherheitsverfahren mit sämtlichen Merkmalen des unabhängigen Verfahrensanspruchs und durch ein Sicherheitssystem mit sämtlichen Merkmalen des unabhängigen Systemanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Sicherheitsverfahren beschrieben sind, selbstverständlich auch im Zusammenhang mit dem erfindungsgemäßen Sicherheitssystem, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Sicherheitsverfahren für ein Sicherheitssystem, insbesondere Zugangssystem, eines Fahrzeuges, zur Aktivierung wenigstens einer sicherheitsrelevanten Funktion bei dem Fahrzeug gemäß Anspruch 1 sowie durch ein Verfahren gemäß Anspruch 13.

Bspw. kann dabei die sicherheitsrelevante Funktion wenigstens eine der nachfolgenden Funktionen umfassen:
- Eine Freigabe eines Zugangs zum Fahrzeug, vorzugsweise die Aktivierung eines Schließsystems des Fahrzeuges für einen Benutzer, bspw. ein Entriegeln des Fahrzeuges, vorzugsweise automatisch und/oder nur dann, wenn das Zugangsgerät innerhalb eines vorgegebenen Maximalabstands zum Fahrzeug lokalisiert wird,
- eine Freigabe eines Motormanagementsystems des Fahrzeuges, insbesondere eine Freigabe eines Motorstarts, vorzugsweise automatisch und/oder nur dann, wenn das Zugangsgerät und/oder der Benutzer im Fahrzeuginnenraum lokalisiert wird,
- eine Deaktivierung einer Alarmanlage des Fahrzeuges, vorzugsweise automatisch und/oder nur dann, wenn das Zugangsgerät innerhalb eines Maximalabstands zum Fahrzeug lokalisiert wird,
- eine Verriegelung des Fahrzeuges, insbesondere automatisch und/oder nur dann, wenn das Zugangsgerät außerhalb eines Maximalabstands zum Fahrzeug lokalisiert wird.

Vorzugsweise kann die Detektion der Annäherung des Zugangsgerätes und/oder der Aufbau / das Durchführen der Datenübertragung automatisch durch das Fahrzeug initiiert werden. Bspw. kann hierzu ein Wecksignal ausgesendet werden und/oder wenigstens ein Annäherungssensor des Fahrzeuges ausgewertet werden, um die Datenübertragung zu initiieren. Auf diese Weise kann ein passives Zugangssystem bereitgestellt werden. Alternativ oder zusätzlich kann die Datenübertragung auch durch das Zugangsgerät initiiert werden.

Es ist denkbar, dass das tragbare (insbesondere mobile) Zugangsgerät als ein Identifikationsgeber (ID-Geber) und/oder als ein Kommunikationsgerät, wie ein Smartphone oder Laptop, insbesondere Mobilfunkkommunikationsgerät, vorzugsweise mit einer Mobilfunkschnittstelle ausgeführt ist. Dies ermöglicht eine komfortable und flexible sowie kostengünstige Aktivierung der Funktion. Vorzugsweise umfasst das Zugangsgerät dabei zur Durchführung der Datenübertragung eine Funkschnittstelle, insbesondere eine Bluetooth-Schnittstelle, bevorzugt eine Bluetooth Low Energy Schnittstelle.

Bevorzugt ist dabei die Datenübertragung als eine verbindungslose Datenübertragung zwischen dem Zugangsgerät und dem Fahrzeug ausgeführt, sodass bspw. die dadurch übertragenen Daten (Pakete) nicht (zwangsläufig oder stets) fälschungssicher authentisiert sind.

Bspw. wird die Datenübertragung als eine Bluetooth-, insbesondere Bluetooth Low Energy-, Datenübertragung durchgeführt, insbesondere im sogenannten Bluetooth Advertising Mode (im Gegensatz zum Connection-Mode bei verbindungsbehafteter Bluetooth Kommunikation, zwischen zumindest zwei vorgegebenen Partnern/Geräten). Mit anderen Worten kann die Datenübertragung über eine Broadcasting-Kommunikation (an jedermann bzw. jeden Partner/Gerät) erfolgen. Dies hat den Vorteil, dass in einfacher und schneller Weise, insbesondere ohne aufwendigen Verbindungsaufbau, die Datenübertragung durchgeführt werden kann.

Unter der "fahrzeugseitigen" Zuordnung wird dabei insbesondere verstanden, dass die Zuordnung durch das Fahrzeug erfolgt, insbesondere durch das Sicherheitssystem, bevorzugt durch eine Fahrzeugelektronik, vorzugsweise durch eine Auswertung gemäß dem Sicherheitsmechanismus, bspw. durch eine Nutzung eines Verifikationsschlüssels und/oder durch einen Vergleich des Sicherheitsmerkmals mit wenigstens einer Vorgabe (bspw. einer Zuordnungstabelle). Insbesondere kann das Überprüfen und/oder Zuordnen dabei unabhängig vom Kommunikationskanal erfolgen, d. h. nur anhand der durch das Fahrzeug empfangenen Daten der Dateneinheit. Dies hat den Vorteil, dass unabhängig von den Sicherheitsvorkehrungen bei der Datenübertragung als solche, d. h. insbesondere bei dem Kommunikationskanal, eine Integrität und Urheberschaft der Dateneinheit gewährleistet und die Dateneinheit zuverlässig dem Zugangsgerät zugeordnet werden kann.

Auch kann es dabei möglich sein, dass unter einer fahrzeugseitigen Zuordnung auch eine weitere Kommunikation des Fahrzeuges, insbesondere über das Internet, bspw. mit einem Server oder einem weiteren Gerät, verstanden wird. Von dem Server oder weiteren Gerät kann dann bspw. eine Zuordnungstabelle abgerufen werden und/oder die eigentliche Zuordnung anhand des Sicherheitsmerkmals vorgenommen werden.

Es ist dabei denkbar, dass die fahrzeugseitige Zuordnung des Zugangsgerätes anhand der (Nutz-) Daten der Dateneinheit durchgeführt werden kann, bspw. durch eine Auswertung des Sicherheitsmerkmals und/oder wenigstens einer dem Sicherheitsmerkmal zugeordneten Nutzdateninformation. Hierzu ist das Sicherheitsmerkmal und/oder die Nutzdateninformation für das Zugangsgerät spezifisch, d. h. lässt zuverlässig Rückschlüsse auf das Zugangsgerät zu.

Erfindungsgemäß ist das Sicherheitsmerkmal als eine elektronische, insbesondere digitale, Signatur ausgeführt sein, bspw. gemäß einem digitalen Signaturverfahren (als Sicherheitsmechanismus). Bevorzugt kann das Sicherheitsmerkmal für das Zugangsgerät und/oder den Sicherheitsmechanismus spezifisch sein, insbesondere kryptografisch fest dem Zugangsgerät und/oder dem Sicherheitsmechanismus zugeordnet sein, und wird vorzugsweise anhand eines geheimen Signaturschlüssels generiert. Bspw. kann anhand eines öffentlichen Verifikationsschlüssel (durch eine Verarbeitung des Sicherheitsmerkmals) die Zuordnung der Dateneinheit zum Zugangsgerät, d. h. die Urheberschaft und Integrität der Dateneinheit, bestätigt werden.

Alternativ oder zusätzlich kann das Sicherheitsmerkmal als ein für das Zugangsgerät gerätespezifisches, d. h. bspw. herstellerspezifisches, Merkmal ausgeführt sein oder anhand eines solchen Merkmals bestimmt werden. Das Merkmal umfasst dabei bspw. herstellerspezifische Daten des Zugangsgeräts. Insbesondere kann das Sicherheitsmerkmal dadurch generiert werden, dass ein randomisierter Verschlüsselungsalgorithmus auf diese Daten angewendet wird. Bspw. können die Daten dann als Nutzdateninformation der Dateneinheit übertragen werden. Insbesondere ist durch eine Authentisierung dieser Daten die wenigstens eine Dateneinheit dann einem bestimmten Zugangsgerät zuzuordnen. Somit kann der Vorteil erzielt werden, dass jede Dateneinheit einzigartige Daten aufweist, welche das Zugangsgerät fälschungssicher authentifizieren. Ein Vortäuschen einer Annäherung kann damit erschwert werden, da die Dateneinheit (insbesondere Pakete) nicht wiederholt oder selbst berechnet werden können.

Insbesondere erfolgt dabei die Datenübertragung nicht als verbindungsbehaftete Übertragung der Dateneinheit, sondern als verbindungslose, und damit vorzugsweise auch unverschlüsselte, Übertragung. Unter einer unverschlüsselten Übertragung wird dabei verstanden, dass der Kommunikationskanal selbst unverschlüsselt ist (wohingegen die Nutzdaten, bspw. auf Applikationsebene, ggf. auch verschlüsselt bzw. kryptografisch gesichert werden können). Mit anderen Worten kann eine sehr flexible und zuverlässige Absicherung der Aktivierung der Funktion durch den Sicherheitsmechanismus dadurch erfolgen, dass eine (vorzugsweise kryptografische) Sicherung durch das Sicherheitsmerkmal, insbesondere auf Nutzdaten- bzw. Applikationsebene, bereitgestellt wird.

Bspw. kann es vorgesehen sein, dass das Sicherheitsmerkmal und/oder eine durch das Sicherheitsmerkmal abgesicherte Nutzdateninformation für das Zugangsgerät spezifisch, insbesondere hardware- und/oder herstellerspezifisch, ist. Dies erlaubt, insbesondere im Gegensatz zu einem einfachen verbindungsbehafteten Übertragen eines Codes, eine gerätespezifische Zuordnung der Dateneinheit. Vorzugsweise wird dabei beim Überprüfen nicht (nur) der Inhalt der Nutzdaten der Dateneinheit überprüft, sondern auch die Integrität der Datenübertragung anhand des Sicherheitsmerkmals. Mit anderen Worten kann überprüft werden, ob die übertragene Dateneinheit korrekt und unmodifiziert vom autorisierten Zugangsgerät stammt, und somit eine Datenintegrität und Authentizität vorliegt.

Bevorzugt kann die Aktivierung der Funktion anhand der Datenübertragung dadurch erfolgen, dass die bei der Datenübertragung übertragenen (Nutz-) Daten und/oder Informationen der dazu genutzten wenigstens einen Kommunikationsschnittstelle ausgewertet werden. Bspw. kann als eine solche Information eine Signalstärke bei einer Empfangsschnittstelle (d. h. bspw. bei einem Empfangsknoten) des Fahrzeuges ausgewertet werden. Insbesondere kann die Signalstärke derart ausgewertet werden, dass eine Abstandsinformation über einen Abstand des Fahrzeuges zum Zugangsgerät ermittelt wird und/oder eine Lokalisation durchgeführt wird. Dies ermöglicht es bspw., die Abstandsinformation und/oder Lokalisation für die Entscheidung zu nutzen, ob die sicherheitsrelevante Funktion aktiviert werden soll oder nicht.

Weiter kann es möglich sein, dass der Sicherheitsmechanismus als ein Mechanismus zur Gewährleistung der Sicherheit und/oder Integrität und/oder Authentizität bei der Datenübertragung ausgeführt ist, und vorzugsweise ein kryptografisches Signaturverfahren für die Bestimmung einer digitalen Signatur umfasst und/oder parametrisiert. Bspw. wird der Sicherheitsmechanismus dadurch vorgegeben, dass für den Sicherheitsmechanismus wenigstens ein geheimer Signaturschlüssel und wenigstens ein öffentlicher Verifikationsschlüssel und/oder eine Tabelle (Zuordnungstabelle) mit gerätespezifischen Informationen für unterschiedliche Zugangsgeräte zur Bestimmung von autorisierten Zugangsgeräten vorgegeben und/oder vorgespeichert wird, insbesondere im Fahrzeug dauerhaft gespeichert wird. Bspw. sind die gerätespezifischen Informationen als Hardware-Codes ausgebildet, sodass ein Vergleich der gerätespezifischen Informationen mit einer übertragenen Nutzdateninformation eine Zuordnung der Dateneinheit zu einem spezifischen Zugangsgerät erlaubt. In einem weiteren Schritt kann dann das Sicherheitsmerkmal genutzt werden, um die Integrität und/oder Authentizität der Nutzdateninformation zu bewerten. Alternativ oder zusätzlich kann auch das Sicherheitsmerkmal bereits die Nutzdateninformation umfassen, sodass bspw. auf eine separate Übertragung der Nutzdateninformation (im Klartext) verzichtet werden kann. Dies ist bspw. der Fall, wenn die Nutzdateninformation verschlüsselt wird, und dann verschlüsselt als Sicherheitsmerkmal der Dateneinheit übertragen wird. Vorzugsweise umfasst dabei die Gewährleistung der Integrität die Prüfung des korrekten Inhalts und/oder eines unmodifizierten Zustands und/oder die Erkennung von Modifikationen und/oder die Prüfung der temporalen Korrektheit der Dateneinheit.

Es ist denkbar, dass das Fahrzeug als ein Kraftfahrzeug und/oder als ein Elektrofahrzeug und/oder als ein Hybridfahrzeug und/oder als ein selbstfahrendes Fahrzeug und/oder als ein Personenkraftfahrzeug ausgeführt ist. Insbesondere umfasst das Fahrzeug zumindest einen Teil des Sicherheitssystems, bspw. als ein aktives oder passives Zugangssystem und/oder Keyless-Go-System oder dergleichen.

Außerdem kann es im Rahmen der Erfindung von Vorteil sein, dass die Datenübertragung unidirektional und/oder verbindungslos über eine Funk-Kommunikationstechnologie, insbesondere über Bluetooth oder Bluetooth Low Energy, durchgeführt wird, vorzugsweise über einen kryptografisch ungeschützten Kommunikationskanal, sodass ein kryptografischer Schutz zumindest im Wesentlichen (bzw. vorranging oder ausschließlich) durch das Sicherheitsmerkmal und/oder den Sicherheitsmechanismus bereitgestellt wird. Es kann möglich sein, dass die Datenübertragung verbindungslos und/oder unidirektional erfolgt, sodass bevorzugt das Zugangsgerät als Sender und das Sicherheitssystem am Fahrzeug, insbesondere wenigstens ein Empfangsknoten, als Empfänger ungekoppelt miteinander sind, und/oder auch mehrere Empfänger gleichzeitig (oder zeitlich versetzt) die Dateneinheit (d. h. auch inhaltlich gleiche, ggf. zeitlich versetzt gesendete weitere Dateneinheiten) empfangen können. Insbesondere wird dabei unter einem ungeschützten Kommunikationskanal verstanden, dass der Kommunikationskanal selbst (bspw. auf Transportebene bzw. in Bezug auf die Steuer- und/oder Protokollinformationen) unverschlüsselt oder nur schwach geschützt ist, sodass eine kryptografische Sicherung vorranging über eine Anpassung der Nutzdaten realisiert wird. Bspw. können dabei die Dateneinheit bzw. die Nutzdaten der Dateneinheit im Klartext und/oder per Broadcast übertragen werden.

Es kann optional möglich sein, dass das Aktivieren der sicherheitsrelevanten Funktion gemäß Schritt d) in Abhängigkeit zumindest von dem Überprüfungsergebnis und/oder einer Signalstärke bei dem Übertragen der Dateneinheit erfolgt, wobei vorzugsweise anhand der Signalstärke ein Abstand zwischen dem Zugangsgerät und dem Fahrzeug bestimmt wird, und die sicherheitsrelevante Funktion nur bei ausreichend geringem Abstand aktiviert wird. Insbesondere bietet eine Prüfung des Überprüfungsergebnisses dabei die zusätzliche Sicherheit, dass nur ein autorisiertes und/oder authentifiziertes Zugangsgerät zur Aktivierung der Funktion bei ausreichend geringem Abstand genutzt werden kann. Bspw. kann die Signalstärke dabei anhand von Received Signal Strength Indication (RSSI) Daten bestimmt werden, insbesondere bei einem Empfangsknoten des Fahrzeuges, welcher insbesondere als Bluetooth-Schnittstelle ausgeführt ist.

Erfindungsgemäß umfasst die Dateneinheit wenigstens eine Nutzdateninformation und anhand der Nutzdateninformation die Dateneinheit fahrzeugseitig dem Zugangsgerät zugeordnet wird, wobei zum kryptografischen Schutz dieser Zuordnung das Sicherheitsmerkmal (gemäß Schritt a)) anhand der Nutzdateninformation bestimmt wird, sodass die Nutzdateninformation signiert wird. Insbesondere kann anschließend nach der Datenübertragung die Integrität der Dateneinheit und/oder der Nutzdateninformation dadurch überprüft werden, dass das Sicherheitsmerkmal ausgewertet wird. Bspw. kann hierzu das Sicherheitsmerkmal anhand eines Verifikationsschlüssels überprüft werden. Alternativ oder zusätzlich kann anhand des Sicherheitsmerkmals (oder des Verifikationsschlüssels) auch die Nutzdateninformation überprüft (oder entschlüsselt) werden.

Insbesondere kann dabei das Sicherheitsmerkmal wenigstens eine der nachfolgenden Funktionen erfüllen (und bspw. wenigstens einer der nachfolgenden Schritte vorgesehen sein):
- Überprüfen der Korrektheit und/oder Integrität und/oder Urheberschaft der Nutzdateninformation, bspw. durch Berechnung eines Prüfwertes anhand des Sicherheitsmerkmals und/oder eines Verifikationsschlüssels,
- Zuordnen der Nutzdateninformation und/oder der wenigstens einen Dateneinheit zu einem bestimmten Zugangsgerät,
- Überprüfen der Zuordnung dahingehend, dass das zugeordnete Zugangsgerät dazu autorisiert ist, die sicherheitsrelevante Funktion zu aktivieren, insbesondere anhand einer Zuordnungstabelle.

Bevorzugt kann der Prüfwert dabei derart mit der Nutzdateninformation korreliert sein, dass der Prüfwert ein vorgegebenes Ergebnis aufweisen muss, um die Nutzdateninformation zu bestätigen. Hierzu kann bspw. ein Sicherheits- und/oder Verschlüsselungsalgorithmus derart auf die Nutzdateninformation und/oder das Sicherheitsmerkmal angewandt werden, dass durch einen Vergleich des Sicherheitsmerkmals mit der Nutzdateninformation die Integrität geprüft werden kann.

Bspw. kann der Sicherheitsmechanismus und/oder das Überprüfen der Korrektheit und/oder Integrität und/oder Urheberschaft der Nutzdateninformationen und/oder das Überprüfen gemäß Schritt c) zumindest teilweise die Nutzung eines symmetrischen und/oder asymmetrischen kryptographischen Verfahrens umfassen, bspw. eines randomisierten Verschlüsselungsalgorithmus und/oder eines RSA-Signaturverfahrens.

Es kann ferner möglich sein, dass die Nutzdateninformation zumindest eine gerätespezifische Information, insbesondere eine Geräteadresse des Zugangsgeräts, vorzugsweise eine Bluetooth-Geräteadresse, umfasst, wobei vorzugsweise das Sicherheitsmerkmal (gemäß Schritt a)) anhand der gerätespezifischen Information bestimmt wird, sodass bevorzugt (gemäß Schritt c)) eine Authentifizierung der gerätespezifischen Information und/oder eine Zuordnung der Dateneinheit zum Zugangsgerät anhand der gerätespezifischen Information durchgeführt wird. Insbesondere wird die Geräteadresse bzw. Bluetooth-Geräteadresse mit einem IRK-Schlüssel (Identity Resolving Key) verrechnet. Vorzugsweise wird zur Zuordnung die gerätespezifische Information mit vorgegebenen Informationen (bspw. einer Zuordnungstabelle) verglichen, und nur bei einer Übereinstimmung das Überprüfungsergebnis als positiv festgelegt, sodass die sicherheitsrelevante Funktion aktiviert werden kann.

Des Weiteren ist es denkbar, dass das Aktivieren (gemäß Schritt d)) in Abhängigkeit von einer Lokalisation des Zugangsgeräts anhand wenigstens einer Abstandsinformation (wie einer Signalstärke bei der Datenübertragung) über einen Abstand des Zugangsgeräts zum Fahrzeug erfolgt, wobei (vor Schritt d)) zumindest einer der nachfolgenden Schritte vorgesehen ist, welche vorzugsweise nacheinander oder in beliebiger Reihenfolge durchgeführt werden (wobei auch einzelne Schritte wiederholt durchgeführt werden können):
- Digitales Signieren einer Nutzdateninformation für die Dateneinheit, sodass vorzugsweise eine digitale Signatur als Sicherheitsmerkmal für die Dateneinheit berechnet wird, insbesondere durch das Zugangsgerät,
- Übertragen der Dateneinheit, wobei die (signierte) Nutzdateninformation und das Sicherheitsmerkmal als Nutzdaten der Dateneinheit von dem Zugangsgerät an das Fahrzeug übertragen werden, insbesondere gemäß Schritt b), wobei vorzugsweise die gesamten Nutzdaten und/oder die Nutzdateninformation der Dateneinheit unverschlüsselt übertragen werden, (dies bezieht sich insbesondere nur auf die Übertragung, sodass insbesondere die Nutzdaten oder die Nutzdateninformation selbst verschlüsselt sein kann, sodass ggf. nur die Übertragung unverschlüsselt, jedoch mit verschlüsseltem Inhalt der Nutzdaten, d. h. bspw. auf Applikationsebene und nicht auf Transport- bzw. Koppelelement- bzw. Schnittstellenebene verschlüsselt, erfolgt),
- Bestimmen der Abstandsinformation, insbesondere anhand der Datenübertragung, vorzugsweise anhand einer Messung einer Signalstärke bei der Datenübertragung, bevorzugt durch das Fahrzeug,
wobei vorzugsweise (gemäß Schritt c)) die Nutzdateninformation und/oder die Abstandsinformation anhand des Sicherheitsmerkmals überprüft, insbesondere authentifiziert, wird.

Die unverschlüsselte Übertragung bezieht sich hierbei insbesondere nur auf die Datenübertragung (d. h. insbesondere auf die Transportebene). Damit ist es möglich, dass auch eine verbindungslose Übertragung genutzt werden kann, um so die Zuverlässigkeit und Effizienz bei dem Sicherheitssystem zu erhöhen.

Gemäß einem weiteren Vorteil kann vorgesehen sein, dass (insbesondere bei Schritt c)) das Sicherheitsmerkmal und/oder die Nutzdateninformation kryptographisch verifiziert wird, vorzugweise anhand wenigstens einer Verifizierungsvorgabe, wie eines Verifizierungsschlüssels, des Sicherheitsmechanismus, bevorzugt anhand eines Verifizierungsalgorithmus und/oder eines Verifizierungsschlüssels. Bevorzugt ist dabei der Verifizierungsschlüssel bei dem Fahrzeug vorgespeichert, bspw. in einem nicht-flüchtigen Datenspeicher des Fahrzeuges. Besonders bevorzugt ist der Verifizierungsschlüssel kryptografisch geschützt, um eine Manipulation oder ein unberechtigtes Auslesen zu verhindern.

Ferner ist es optional vorgesehen, dass (insbesondere gemäß Schritt c)) ein positives Überprüfungsergebnis bestimmt wird, wenn anhand des übertragenen Sicherheitsmerkmals die Authentizität des Zugangsgeräts und/oder die Integrität der Dateneinheit erfolgreich festgestellt wird, wobei vorzugsweise bei Schritt d) das Aktivieren (der sicherheitsrelevanten Funktion) nur erfolgt, wenn das Überprüfungsergebnis positiv ist. Dies hat den Vorteil, dass sicherheitskritische Funktionen nur für berechtigte Benutzer des Fahrzeugs bereitgestellt werden können.

Weiter ist im Rahmen der Erfindung denkbar, dass die wenigstens eine Dateneinheit, zumindest auf einer transportorientierten Ebene, unverschlüsselt übertragen wird, und vorzugsweise somit wenigstens eine unverschlüsselte Steuer- und/oder Protokollinformation und/oder zumindest teilweise unverschlüsselte Nutzdaten, insbesondere wenigstens mit einer unverschlüsselten Nutzdateninformation, umfasst, wobei vorzugsweise die Dateneinheit als ein Datenpaket ausgeführt ist, und bevorzugt die Nutzdaten wenigstens das Sicherheitsmerkmal unverschlüsselt umfassen. Insbesondere ist bei der Datenübertragung eine (zusätzliche) Verschlüsselung des Sicherheitsmerkmals nicht nötig (sodass es in der Dateneinheit unverschlüsselt vorliegen kann), da das Sicherheitsmerkmal bereits durch einen kryptografischen Algorithmus bestimmt worden ist. Damit kann eine besonders zuverlässige und einfachere Sicherheitsprüfung umgesetzt werden.

Bspw. erfolgt bei der Dateneinheit und/oder zur Datenübertragung gemäß dem Sicherheitsmechanismus eine Verschlüsslung auf der anwendungsorientierten Ebene. Diese umfasst z. B. eine Anwendungsschicht gemäß dem OSI-Modell. Die transportorientierte Ebene umfasst bspw. die Sicherungsschicht oder die Schichten unterhalb der Anwendungsschicht oder Sitzungsschicht gemäß dem OSI-Modell.

Es kann im Rahmen der Erfindung vorgesehen sein, dass der Sicherheitsmechanismus wenigstens ein kryptographisches Verfahren umfasst, um vorzugsweise wenigstens eine Zuordnung, insbesondere eine Authentizität, der Dateneinheit (zum Zugangsgerät) zu bestimmen, wobei bevorzugt das kryptographische Verfahren ein digitales Signaturverfahren ist und/oder anhand wenigstens eines Zufallswertes und/oder Rolling-Codes durchgeführt wird. Vorzugsweise kann dabei das Sicherheitsmerkmal als ein Code gemäß einem Rolling-Code-Verfahren ausgeführt sein. Bevorzugt wird dabei, insbesondere basierend auf einem gemeinsamen Geheimnis (wie einem symmetrischen Schlüssel) zwischen Sender (Zugangsgerät) und Empfänger (Fahrzeug bzw. Empfangsknoten) und einem kryptographischen Algorithmus, vom Sender ein sich stets ändernder Code an den Empfänger zur Prüfung übermittelt (Verifizierung). Bspw. wird hierzu ein sogenannter Keeloq-Algorithmus verwendet.

Von weiterem Vorteil kann vorgesehen sein, dass das Sicherheitsmerkmal und/oder eine Nutzdateninformation für das Zugangsgerät spezifisch ist, insbesondere dadurch, dass das

Sicherheitsmerkmal und/oder die Nutzdateninformation direkt oder indirekt anhand einer gerätespezifischen Information, insbesondere einer Gerätekennung, vorzugsweise eines Identity Resolving Key, des Zugangsgeräts bestimmt wird. Bspw. kann dabei die gerätespezifische Information eindeutig einem Zugangsgerät zugeordnet sein bzw. werden, und insbesondere fest im Zugangsgerät gespeichert sein. Damit kann die Sicherheit bei dem Verfahren weiter verbessert werden.

Es ist weiter denkbar, dass (insbesondere bei Schritt c)) anhand des Sicherheitsmerkmals eine Lokalisation des Zugangsgeräts, insbesondere eine durch die Datenübertragung gemessene Abstandsinformation, vorzugsweise ein Messergebnis einer Abstandsmessung, bevorzugt einer Signalstärkemessung, überprüft, insbesondere authentifiziert, wird, wobei besonders bevorzugt die Abstandsinformation als wenigstens eine Nutzdateninformation der Dateneinheit (insbesondere bei Schritt b)) übertragen wird. Dies ermöglicht es, in einfacher Weise eine ausreichende Nähe des Zugangsgeräts zum Fahrzeug festzustellen.

Außerdem ist es im Rahmen der Erfindung optional möglich, dass (insbesondere gemäß Schritt a)) das Bestimmen des Sicherheitsmerkmals für unterschiedliche Dateneinheiten unterschiedlich erfolgt, vorzugsweise anhand eines randomisierten Verschlüsselungsalgorithmus und/oder eines Zufallswertes und/oder eines Zählers und/oder dergleichen. Somit kann die Sicherheit zur Aktivierung der Funktion weiter erhöht werden. Insbesondere kann dabei der Zähler eine fortlaufende Nummerierung oder dergleichen, insbesondere durch eine Zählereinheit (Counter) generieren, bspw. zur Bereitstellung eines Rolling-Codes.

Des Weiteren kann es möglich sein, dass die sicherheitsrelevante Funktion wenigstens eine erste Funktion, insbesondere eine Freigabe eines Zugangs zum Fahrzeug, und/oder wenigstens eine zweite Funktion, insbesondere eine Freigabe eines Motormanagementsystems des Fahrzeuges, umfasst, wobei vorzugsweise die erste Funktion nur dann aktiviert wird, wenn anhand einer Lokalisation ein Mindestabstand des Zugangsgeräts zum Fahrzeug detektiert wird, und bevorzugt die zweite Funktion nur dann aktiviert wird, wenn anhand der Lokalisation das Zugangsgerät im Innenraum des Fahrzeuges detektiert wird. Dadurch kann eine sehr komfortable Möglichkeit zur Aktivierung der Funktionen bereitgestellt werden.

In einer weiteren Möglichkeit kann vorgesehen sein, dass wenigstens zwei oder drei oder weitere Empfangsknoten des Fahrzeuges vorgesehen sind, um vorzugsweise jeweils die Dateneinheit zu empfangen und/oder die Datenübertragung durchzuführen, wobei in Abhängigkeit von dem Empfang und/oder der Datenübertragung der Empfangsknoten und/oder einer Überprüfung der Integrität der jeweils empfangenen Dateneinheiten eine Lokalisation des Zugangsgeräts durchgeführt wird, und bevorzugt in Abhängigkeit von der Lokalisation die wenigstens eine sicherheitsrelevante Funktion aktiviert wird. Bspw. können die unterschiedlichen Signalstärkesignale der einzelnen Empfangsknoten dazu genutzt werden, um eine besonders genaue Lokalisierung des Zugangsgeräts durchzuführen. Hierzu kann bspw. eine Triangulation oder dergleichen zur Lokalisation (Ortung) eingesetzt werden.

Gemäß einem weiteren Vorteil kann vorgesehen sein, dass eine Lokalisation durch eine Abstandsmessung, insbesondere Signalstärkemessung, anhand der Datenübertragung bei unterschiedlichen Empfangsknoten des Fahrzeuges erfolgt, insbesondere anhand des gemessenen Abstands der jeweiligen Empfangsknoten zu dem Zugangsgerät, wobei bevorzugt die Ergebnisse der Abstandsmessung zur Lokalisation miteinander verglichen werden. Vorzugsweise können dabei auch alternativ oder zusätzliche Ortungsdaten, bspw. durch ein GPS (Global Positioning System), insbesondere zur Erhöhung der Ortungsgenauigkeit herangezogen werden.

Es kann im Rahmen der Erfindung vorgesehen sein, dass die Datenübertragung über einen öffentlichen Advertising- und/oder Broadcast-Modus, insbesondere einer Bluetooth-Kommunikationstechnologie (d. h. auch Bluetooth Low Energy), erfolgt, sodass die übertragenen Nutzdaten, insbesondere auch das Sicherheitsmerkmal, öffentlich auswertbar und/oder lesbar sind, vorzugsweise durch sämtliche Empfangsknoten des Fahrzeuges. Damit ist es grundsätzlich denkbar, dass die übertragenen Nutzdaten der Dateneinheit(en) abgefangen und ausgelesen werden können. Hierbei bietet der Sicherheitsmechanismus den eigentlichen Schutz, um die Integrität der Dateneinheit zu gewährleisten. Insbesondere kann dabei die Datenübertragung ausschließlich unidirektional erfolgen.

Auch ist es denkbar, dass eine Nutzdateninformation der Dateneinheit wenigstens das Sicherheitsmerkmal und wenigstens einen Sicherheitscode für das Sicherheitssystem, insbesondere ein Zugangssystem, umfasst, wobei vorzugsweise das Aktivieren gemäß Schritt d) in Abhängigkeit von dem Sicherheitscode erfolgt. In anderen Worten kann durch das Sicherheitssystem eine Authentifizierung anhand der Dateneinheit erfolgen.

Ebenfalls Gegenstand der Erfindung ist ein Sicherheitssystem für ein Fahrzeug zur Aktivierung wenigstens einer sicherheitsrelevanten Funktion bei dem Fahrzeug anhand wenigstens einer Datenübertragung zwischen einem tragbaren Zugangsgerät und dem Fahrzeug gemäß Anspruch 13.

Damit bringt das erfindungsgemäße Sicherheitssystem die gleichen Vorteile mit sich, wie sie ausführlich mit Bezug auf ein erfindungsgemäßes Sicherheitsverfahren beschrieben worden ist. Zudem kann das Sicherheitssystem geeignet sein, gemäß einem erfindungsgemäßen Sicherheitsverfahren betrieben zu werden. Auch ist es optional denkbar, dass die Verarbeitungsvorrichtung zur Durchführung eines erfindungsgemäßen Sicherheitsverfahrens ausgebildet ist.

Insbesondere kann dabei der wenigstens eine Empfangsknoten am und/oder im Fahrzeug angeordnet, vorzugsweise unlösbar befestigt sein. Alternativ oder zusätzlich können die Empfangsknoten jeweils wenigstens eine Antenne, insbesondere Bluetooth-Antenne, aufweisen und/oder jeweils als Bluetooth-Schnittstelle, vorzugsweise Bluetooth Low Energy-Schnittstelle, ausgeführt sein.

Optional kann es vorgesehen sein, dass wenigstens ein erster Empfangsknoten am Fahrzeugheck und/oder wenigstens ein zweiter Empfangsknoten in einem Türgriff des Fahrzeuges und/oder wenigstens ein dritter Empfangsknoten im Fahrzeuginnenraum und/oder wenigstens ein vierter Empfangsknoten im Frontbereich des Fahrzeuges vorgesehen sind, sodass vorzugsweise in Abhängigkeit von einem Abstand zwischen dem Zugangsgerät und den jeweiligen Empfangsknoten eine Lokalisation des Zugangsgeräts anhand der Datenübertragung erfolgen kann. Damit kann durch die Ortung des Zugangsgeräts eine sicherere Möglichkeit zur kontaktlosen Aktivierung der sicherheitsrelevanten Funktion bereitgestellt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines erfindungsgemäßen Sicherheitssystems,
- Fig. 2: eine weitere schematische Darstellung eines erfindungsgemäßen Sicherheitssystems und
- Fig. 3: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

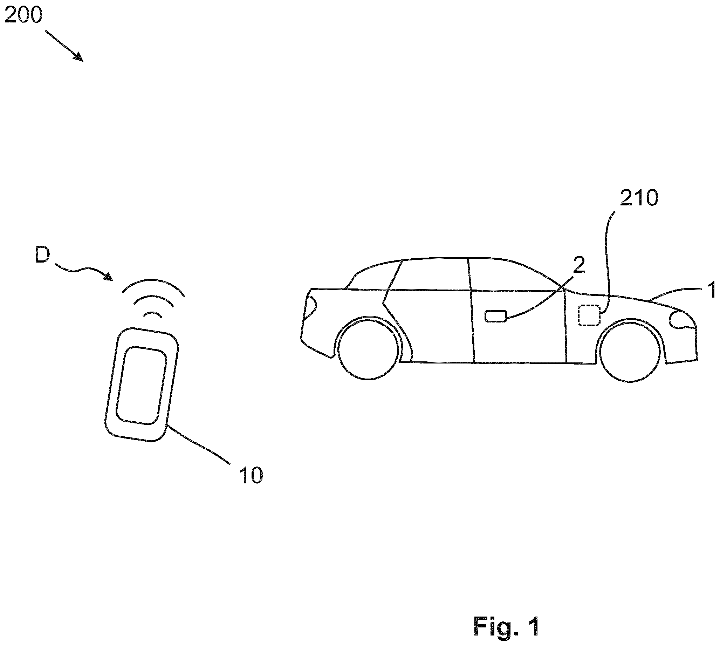

In Figur 1 ist schematisch ein erfindungsgemäßes Sicherheitssystem 200 gezeigt. Dabei ist ein Fahrzeug 1 dargestellt, das wenigstens einen Empfangsknoten 210 zur Durchführung einer Datenübertragung D beim Fahrzeug 1 aufweist.

Die Datenübertragung D dient dabei dazu, die Anwesenheit und/oder Annäherung eines Zugangsgeräts 10 zu detektieren und/oder eine Lokalisation des Zugangsgeräts 10 und/oder eine Authentifizierung durchzuführen. Auf diese Weise kann das Zugangsgerät 10 dazu genutzt werden, eine sicherheitsrelevante Funktion bei dem Fahrzeug 1 zu aktivieren. Hierzu wird bspw. ein autorisiertes Zugangsgerät 10 in die Nähe des Fahrzeuges 1 gebracht.

Es kann z. B. möglich sein, dass, sobald das Zugangsgerät 10 in die Empfangsreichweite des Fahrzeuges 1 bzw. des wenigstens einen Empfangsknoten 210 gelangt, die Datenübertragung D durchgeführt wird. Diese Datenübertragung D dient dabei dann insbesondere dazu, wenigstens eine Dateneinheit 50 von dem Zugangsgerät 10 an das Fahrzeug 1 zu übertragen. Um einen flexiblen und einfachen Datenaustausch und/oder Kommunikationsaufbau zwischen dem Zugangsgerät 10 und dem Fahrzeug 1 zu gewährleisten, wird dabei die Datenübertragung D vorzugsweise unverschlüsselt und/oder verbindungslos durchgeführt.

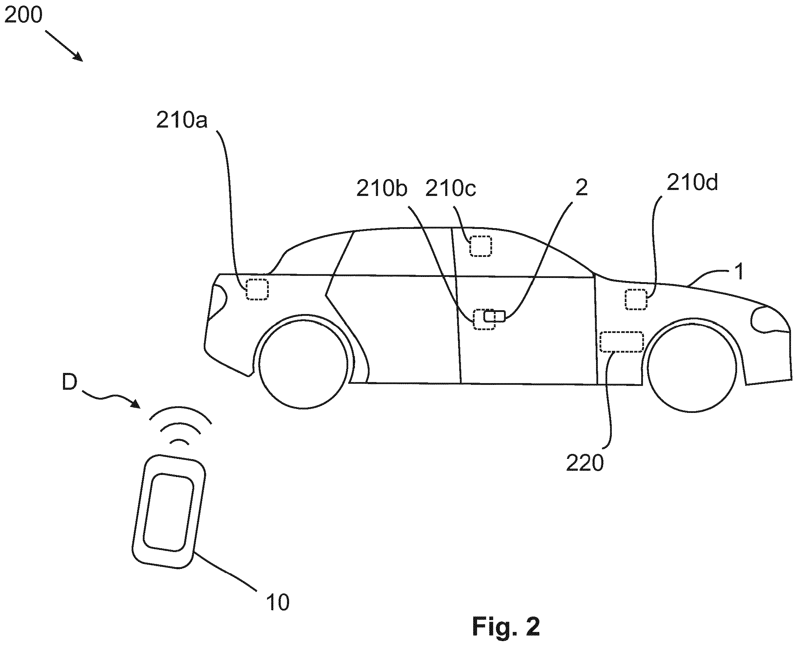

In Figur 2 ist gezeigt, dass auch mehrere Empfangsknoten 210 des Fahrzeuges 1 vorgesehen sein können. Bspw. können wenigstens ein erster Empfangsknoten 210a und/oder ein zweiter Empfangsknoten 210b und/oder ein dritter Empfangsknoten 210c und/oder ein vierter Empfangsknoten 210d an unterschiedlichen Positionen des Fahrzeuges 1 befestigt sein. Mögliche Positionen sind dabei bspw. der Fahrzeuginnenraum und/oder ein Türgriff 2 und/oder ein Heckbereich des Fahrzeuges 1. Um die übertragene Dateneinheit 50 auszuwerten, kann bspw. eine Verarbeitungsvorrichtung 220 vorgesehen sein. Diese kann bspw. auch geeignet sein, um zumindest teilweise das erfindungsgemäße Sicherheitsverfahren 100 durchzuführen, insbesondere eine Überprüfung der Dateneinheit 50 durchzuführen.

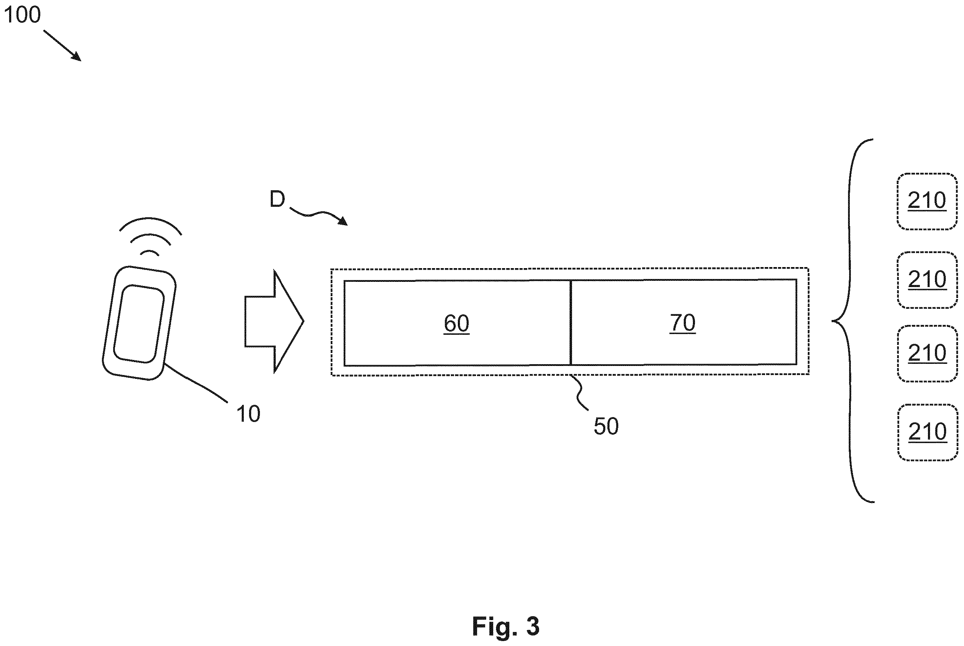

In Figur 3 ist schematisch ein erfindungsgemäßes Sicherheitsverfahren 100 visualisiert, insbesondere durch die repräsentative Darstellung einer Dateneinheit 50. Gemäß einem ersten Verfahrensschritt erfolgt dabei ein Bestimmen wenigstens eines Sicherheitsmerkmals 60 gemäß einem vorgegebenen Sicherheitsmechanismus. Gemäß einem zweiten Verfahrensschritt erfolgt eine Durchführung der Datenübertragung D, sodass wenigstens eine Dateneinheit 50 mit zumindest dem Sicherheitsmerkmal 60 und/oder einer Nutzdateninformation 70 von dem Zugangsgerät 10 an das Fahrzeug 1 übertragen wird. Anschließend kann gemäß einem dritten Verfahrensschritt ein Überprüfen der übertragenen Dateneinheit 50 anhand des übertragenen Sicherheitsmerkmals 60 gemäß dem Sicherheitsmechanismus erfolgen, um die Dateneinheit 50 fahrzeugseitig dem Zugangsgerät 10 zuzuordnen, sodass ein Überprüfungsergebnis bestimmt wird. Auch kann zur Bestimmung des Überprüfungsergebnisses und/oder zur Zuordnung der Dateneinheit 50 zum Zugangsgerät 10 die Nutzdateninformation 70 als eine gerätespezifische Information 70 der Dateneinheit 50 ausgewertet werden. Weiter können, insbesondere um die Sicherheit weiter zu erhöhen, mehrere Empfangsknoten 210 des Fahrzeuges 1 vorgesehen sein, welche die wenigstens eine Dateneinheit 50 empfangen können. Dies ermöglicht es, anhand von Informationen, welche bei den jeweiligen Empfangsknoten 210 gewonnen werden (wie eine Signalstärke der jeweiligen Datenübertragung an die jeweiligen Empfangsknoten 210), eine zuverlässige Lokalisierung des Zugangsgeräts 10 durchführen zu können. Somit kann die sicherheitsrelevante Funktion in Abhängigkeit zumindest von dem Überprüfungsergebnis in einfacher und sicherer Weise aktiviert werden.

Die voranstehende Erläuterung der Ausführungsformen beschreibt die vorliegende Erfindung ausschließlich im Rahmen von Beispielen.

### Bezugszeichenliste

- 1: Fahrzeug
- 2: Türgriff
- 10: Zugangsgerät
- 50: Dateneinheit
- 60: Sicherheitsmerkmal
- 70: Nutzdateninformation, gerätespezifische Information
- 100: Sicherheitsverfahren
- 200: Sicherheitssystem
- 210: Empfangsknoten
- 210a: erster Empfangsknoten
- 210b: zweiter Empfangsknoten
- 210c: dritter Empfangsknoten
- 210d: vierter Empfangsknoten
- 220: Verarbeitungsvorrichtung
- D: Datenübertragung

## Patentansprüche

1. Sicherheitsverfahren (100) für ein Sicherheitssystem (200) eines Fahrzeuges (1), zur Aktivierung wenigstens einer sicherheitsrelevanten Funktion bei dem Fahrzeug (1) anhand wenigstens einer Datenübertragung (D) zwischen einem tragbaren Zugangsgerät (10) und dem Fahrzeug (1),
**gekennzeichnet durch die nachfolgenden Schritte:**
a) Bestimmen wenigstens eines Sicherheitsmerkmals (60) gemäß einem vorgegebenen Sicherheitsmechanismus,
b) Durchführen der Datenübertragung (D), sodass wenigstens eine Dateneinheit (50) mit zumindest dem Sicherheitsmerkmal (60) von dem Zugangsgerät (10) an das Fahrzeug (1) übertragen wird,
c) Überprüfen der übertragenen Dateneinheit (50) anhand des übertragenen Sicherheitsmerkmals (60) gemäß dem Sicherheitsmechanismus, um die Dateneinheit (50) fahrzeugseitig dem Zugangsgerät (10) zuzuordnen, sodass ein Überprüfungsergebnis bestimmt wird,
d) Aktivieren der sicherheitsrelevanten Funktion in Abhängigkeit zumindest von dem Überprüfungsergebnis, wobei
die Dateneinheit (50) eine Nutzdateninformation (70) umfasst, und anhand der Nutzdateninformation (70) die Dateneinheit (50) fahrzeugseitig dem Zugangsgerät (10) zugeordnet wird, wobei zum kryptografischen Schutz dieser Zuordnung das Sicherheitsmerkmal (60) gemäß Schritt a) anhand der Nutzdateninformation (70) bestimmt wird, um die Nutzdateninformation (70) zu signieren, wobei das Sicherheitsmerkmal (60) als eine elektronische Signatur ausgeführt ist.

2. Sicherheitsverfahren (100) nach Anspruch 1,
**dadurch gekennzeichnet,**
**dass** die Datenübertragung (D) verbindungslos über eine Funk-Kommunikationstechnologie, insbesondere über Bluetooth oder Bluetooth Low Energy, durchgeführt wird, vorzugsweise über einen kryptografisch ungeschützten Kommunikationskanal, sodass ein kryptografischer Schutz im Wesentlichen durch das Sicherheitsmerkmal (60) und/oder den Sicherheitsmechanismus bereitgestellt wird.

3. Sicherheitsverfahren (100) nach Anspruch 1 oder 2,
**dadurch gekennzeichnet,**
**dass** das Aktivieren der sicherheitsrelevanten Funktion gemäß Schritt d) in Abhängigkeit zumindest von dem Überprüfungsergebnis und einer Signalstärke bei dem Übertragen der Dateneinheit (50) erfolgt, wobei vorzugsweise anhand der Signalstärke ein Abstand zwischen dem Zugangsgerät (10) und dem Fahrzeug (1) bestimmt wird, und die sicherheitsrelevante Funktion nur bei ausreichend geringem Abstand aktiviert wird.

4. Sicherheitsverfahren (100) nach einem der vorhergehenden Ansprüche,
**dadurch gekennzeichnet,**
**dass** die Nutzdateninformation (70) zumindest eine gerätespezifische Information (70), insbesondere eine Geräteadresse des Zugangsgeräts (10), vorzugsweise eine Bluetooth-Geräteadresse, umfasst, wobei das Sicherheitsmerkmal (60) gemäß Schritt a) anhand der gerätespezifischen Information (70) bestimmt wird, sodass vorzugsweise gemäß Schritt c) eine Authentifizierung der gerätespezifischen Information (70) und/oder eine Zuordnung der Dateneinheit (50) zum Zugangsgerät (10) anhand der gerätespezifischen Information (70) durchgeführt wird.

5. Sicherheitsverfahren (100) nach einem der vorhergehenden Ansprüche,
**dadurch gekennzeichnet,**
**dass** das Aktivieren gemäß Schritt d) in Abhängigkeit von einer Lokalisation des Zugangsgeräts (10) anhand einer Abstandsinformation über einen Abstand des Zugangsgeräts (10) zum Fahrzeug (1) erfolgt, wobei vor Schritt d) zumindest die nachfolgenden Schritte vorgesehen sind:
- Digitales Signieren einer Nutzdateninformation (70) für die Dateneinheit (50), sodass vorzugsweise eine digitale Signatur als Sicherheitsmerkmal (60) für die Dateneinheit (50) berechnet wird, insbesondere durch das Zugangsgerät (10),
- Übertragen der Dateneinheit (50), wobei die Nutzdateninformation (70) und das Sicherheitsmerkmal (60) als Nutzdaten der Dateneinheit (50) von dem Zugangsgerät (10) an das Fahrzeug (1) übertragen werden, insbesondere gemäß Schritt b), wobei vorzugsweise die gesamten Nutzdaten und/oder die Nutzdateninformation (70) der Dateneinheit (50) unverschlüsselt übertragen werden,
- Bestimmen der Abstandsinformation, insbesondere anhand der Datenübertragung (D), vorzugsweise anhand einer Messung einer Signalstärke bei der Datenübertragung (D), bevorzugt durch das Fahrzeug (1),
wobei vorzugsweise gemäß Schritt c) die Nutzdateninformation (70) und/oder die Abstandsinformation anhand des Sicherheitsmerkmals (60) überprüft, insbesondere authentifiziert, wird.

6. Sicherheitsverfahren (100) nach einem der vorhergehenden Ansprüche,
**dadurch gekennzeichnet,**
**dass** bei Schritt c) das Sicherheitsmerkmal (60) und/oder die Nutzdateninformation (70) kryptographisch verifiziert wird, vorzugweise anhand wenigstens einer Verifizierungsvorgabe des Sicherheitsmechanismus, bevorzugt durch einen Verifizierungsalgorithmus und/oder anhand eines Verifizierungsschlüssels.

7. Sicherheitsverfahren (100) nach einem der vorhergehenden Ansprüche,
**dadurch gekennzeichnet,**
**dass** gemäß Schritt c) ein positives Überprüfungsergebnis bestimmt wird, wenn anhand des übertragenen Sicherheitsmerkmals (60) die Authentizität des Zugangsgeräts (10) und/oder die Integrität der Dateneinheit (50) erfolgreich festgestellt wird, wobei bei Schritt d) das Aktivieren nur erfolgt, wenn das Überprüfungsergebnis positiv ist.

8. Sicherheitsverfahren (100) nach einem der vorhergehenden Ansprüche,
**dadurch gekennzeichnet,**
**dass** die Dateneinheit (50), zumindest auf einer transportorientierten Ebene, unverschlüsselt übertragen wird, und somit wenigstens eine unverschlüsselte Steuer- und/oder Protokollinformation und/oder zumindest teilweise unverschlüsselte Nutzdaten, insbesondere wenigstens mit einer unverschlüsselten Nutzdateninformation (70), umfasst, wobei vorzugsweise die Dateneinheit (50) als ein Datenpaket (50) ausgeführt ist, und bevorzugt die Nutzdaten wenigstens das Sicherheitsmerkmal (60) unverschlüsselt umfassen.

9. Sicherheitsverfahren (100) nach einem der vorhergehenden Ansprüche,
**dadurch gekennzeichnet,**
**dass** der Sicherheitsmechanismus wenigstens ein kryptographisches Verfahren umfasst, um vorzugsweise wenigstens eine Zuordnung, insbesondere eine Authentizität, der Dateneinheit (50) zu bestimmen, wobei bevorzugt das kryptographische Verfahren ein digitales Signaturverfahren ist und/oder anhand wenigstens eines Zufallswertes und/oder Rolling-Codes durchgeführt wird
und/oder dass das Sicherheitsmerkmal (60) und/oder eine Nutzdateninformation (70) für das Zugangsgerät (10) spezifisch ist, insbesondere dadurch, dass das Sicherheitsmerkmal (60) und/oder die Nutzdateninformation (70) direkt oder indirekt anhand einer gerätespezifischen Information (70), insbesondere einer Gerätekennung, vorzugsweise eines Identity Resolving Key, des Zugangsgeräts (10) bestimmt wird.

10. Sicherheitsverfahren (100) nach einem der vorhergehenden Ansprüche,
**dadurch gekennzeichnet,**
**dass** wenigstens zwei oder drei oder mehrere Empfangsknoten (210) des Fahrzeuges (1) vorgesehen sind, um jeweils die wenigstens eine Dateneinheit (50) zu empfangen und/oder die Datenübertragung (D) durchzuführen, wobei in Abhängigkeit von dem Empfang und/oder der Datenübertragung (D) der Empfangsknoten (210) und/oder einer Überprüfung der Integrität der jeweils empfangenen Dateneinheiten (50) eine Lokalisation des Zugangsgeräts (10) durchgeführt wird, und in Abhängigkeit von der Lokalisation die wenigstens eine sicherheitsrelevante Funktion aktiviert wird.

11. Sicherheitsverfahren (100) nach einem der vorhergehenden Ansprüche,
**dadurch gekennzeichnet,**
**dass** eine Lokalisation durch eine Abstandsmessung, insbesondere Signalstärkemessung, anhand der Datenübertragung (D) bei unterschiedlichen Empfangsknoten (210) des Fahrzeuges (1) erfolgt, insbesondere anhand des gemessenen Abstands der jeweiligen Empfangsknoten (210) zu dem Zugangsgerät (10), wobei die Ergebnisse der Abstandsmessung zur Lokalisation miteinander verglichen werden.

12. Sicherheitsverfahren (100) nach einem der vorhergehenden Ansprüche,
**dadurch gekennzeichnet,**
**dass** die Datenübertragung (D) über einen öffentlichen Advertising- und/oder Broadcast-Modus, insbesondere einer Bluetooth-Kommunikationstechnologie, erfolgt, sodass die übertragenen Dateneinheiten und/oder Nutzdaten, insbesondere auch das Sicherheitsmerkmal (60), öffentlich auswertbar und/oder lesbar sind, vorzugsweise durch sämtliche Empfangsknoten (210) des Fahrzeuges (1).

13. Sicherheitssystem (200) für ein Fahrzeug (1) zur Aktivierung wenigstens einer sicherheitsrelevanten Funktion bei dem Fahrzeug (1) anhand wenigstens einer Datenübertragung (D) zwischen einem tragbaren Zugangsgerät (10) und dem Fahrzeug (1), aufweisend:
- wenigstens einen Empfangsknoten (210) am Fahrzeug (1), weicher zum Empfang wenigstens einer Dateneinheit (50) durch die Datenübertragung (D) ausgeführt ist,
- wenigstens eine Verarbeitungsvorrichtung (220), welche zur Überprüfung der empfangenen Dateneinheit (50) ausgeführt ist, um die Dateneinheit (50) fahrzeugseitig dem Zugangsgerät (10) zuzuordnen,
wobei die Überprüfung anhand eines Sicherheitsmerkmals (60) der Dateneinheit (50) erfolgt, und in Abhängigkeit von der Überprüfung die sicherheitsrelevante Funktion aktivierbar ist, wobei
die Dateneinheit (50) eine Nutzdateninformation (70) umfasst, und anhand der Nutzdateninformation (70) die Dateneinheit (50) fahrzeugseitig dem Zugangsgerät (10) zuordenbar ist, wobei zum kryptografischen Schutz dieser Zuordnung das Sicherheitsmerkmal (60) anhand der Nutzdateninformation (70) bestimmbar ist, um die Nutzdateninformation (70) zu signieren, wobei das Sicherheitsmerkmal (60) als eine elektronische Signatur ausgeführt ist.

14. Sicherheitssystem (200) nach Anspruch 13, **dadurch gekennzeichnet,**
**dass** wenigstens ein erster Empfangsknoten (210a) am Fahrzeugheck und/oder wenigstens ein zweiter Empfangsknoten (210b) in einem Türgriff (2) des Fahrzeuges (1) und/oder wenigstens ein dritter Empfangsknoten (210c) im Fahrzeuginnenraum und/oder wenigstens ein vierter Empfangsknoten (210d) im Frontbereich des Fahrzeuges (1) vorgesehen sind, sodass in Abhängigkeit von einem Abstand zwischen dem Zugangsgerät (10) und den jeweiligen Empfangsknoten (210) eine Lokalisation des Zugangsgeräts (10) anhand der Datenübertragung (D) erfolgen kann und/oder dass die Verarbeitungsvorrichtung (220) zur Durchführung eines Sicherheitsverfahrens (100) nach einem der vorhergehenden Ansprüche 1-12 ausgebildet ist.

## Claims

1. Security method (100) for a security system (200) of a vehicle (1), for activating at least one security-relevant function on the vehicle (1) by means of at least one data transmission (D) between a portable access device (10) and the vehicle (1),
**characterized by the following steps:**
a) determining at least one security feature (60) according to a predetermined security mechanism,
b) performing the data transmission (D) so that at least one data unit (50) with at least the security feature (60) is transmitted from the access device (10) to the vehicle (1),
c) verifying the transmitted data unit (50) based on the transmitted security feature (60) according to the security mechanism to associate the data unit (50) to the access device (10) on the vehicle side so that a verification result is determined,
d) activating the security-relevant function depending on at least the verification result, wherein
the data unit (50) comprises user data information (70), and the data unit (50) is associated to the access device (10) on the vehicle side on the basis of the user data information (70), wherein the security feature (60) is determined according to step a) on the basis of the user data information (70) for the cryptographic protection of this association in order to sign the user data information (70), wherein the security feature (60) is designed as an electronic signature.

2. Security method (100) according to claim 1,
**characterized in that**
the data transmission (D) is carried out without connection via a radio communication technology, in particular via Bluetooth or Bluetooth Low Energy, preferably via a cryptographically unprotected communication channel, so that cryptographic protection is essentially provided by the security feature (60) and/or the security mechanism.

3. Security method (100) according to claim 1 or 2,
**characterized in that**
the activation of the security-relevant function according to step d) occurs depending on at least of the verification result and of a signal strength during the transmission of the data unit (50), wherein a distance between the access device (10) and the vehicle (1) is preferably determined on the basis of the signal strength, and the security-relevant function is activated only if the distance is sufficiently small.

4. Security method (100) according to any one of the preceding claims,
**characterized in that**
the user data information (70) comprises at least one device-specific information (70), in particular a device address of the access device (10), preferably a Bluetooth device address, wherein the security feature (60) is determined according to step a) on the basis of the device-specific information (70), so that, preferably according to step c), authentication of the device-specific information (70) and/or an association of the data unit (50) to the access device (10) is carried out on the basis of the device-specific information (70).

5. Security method (100) according to any one of the preceding claims,
**characterized in that**
the activation according to step d) occurs depending on a localization of the access device (10) on the basis of distance information about a distance of the access device (10) from the vehicle (1), wherein at least the following steps are provided before step d):
- digitally signing user data information (70) for the data unit (50), so that preferably a digital signature is calculated as a security feature (60) for the data unit (50), in particular by the access device (10),
- transmitting the data unit (50), wherein the user data information (70) and the security feature (60) are transmitted as user data of the data unit (50) from the access device (10) to the vehicle (1), in particular according to step b), wherein preferably the entire user data and/or the user data information (70) of the data unit (50) are transmitted unencrypted,
- determining the distance information, in particular based on the data transmission (D), preferably based on a measurement of a signal strength during the data transmission (D), preferably by the vehicle (1),
wherein preferably according to step c) the user data information (70) and/or the distance information is checked, in particular authenticated, on the basis of the security feature (60).

6. Security method (100) according to any one of the preceding claims,
**characterized in that**
in step c), the security feature (60) and/or the user data information (70) is cryptographically verified, preferably by means of at least one verification specification of the security mechanism, preferably by means of a verification algorithm and/or by means of a verification key.

7. Security method (100) according to any one of the preceding claims,
**characterized in that**
according to step c), a positive verification result is determined if the authenticity of the access device (10) and/or the integrity of the data unit (50) is successfully established on the basis of the transmitted security feature (60), wherein, in step d), the activation takes place only if the verification result is positive.

8. Security method (100) according to any one of the preceding claims,
**characterized in that**
the data unit (50), at least on a transport-oriented level, is transmitted unencrypted, and thus comprises at least unencrypted control and/or protocol information and/or at least partially unencrypted user data, in particular at least with unencrypted user data information (70), wherein preferably the data unit (50) is designed as a data packet (50), and preferably the user data comprise at least the security feature (60) unencrypted.

9. Security method (100) according to any one of the preceding claims,
**characterized in that**
the security mechanism comprises at least one cryptographic method for preferably determining at least one association, in particular an authenticity, of the data unit (50), wherein the cryptographic method preferably is a digital signature method and/or is carried out on the basis of at least one random value and/or rolling code and/or the security feature (60) and/or user data information (70) is specific to the access device (10), in particular **in that** the security feature (60) and/or the user data information (70) is determined directly or indirectly on the basis of device-specific information (70), in particular a device identifier, preferably an identity resolving key, of the access device (10).

10. Security method (100) according to any one of the preceding claims,
**characterized in that**
at least two or three or more receiving nodes (210) of the vehicle (1) are provided in order to receive the at least one data unit (50) in each case and/or to carry out the data transmission (D), wherein the access device (10) is localized depending on the reception and/or the data transmission (D) of the receiving nodes (210) and/or a check of the integrity of the respectively received data units (50), and the at least one security-relevant function is activated depending on the localization.

11. Security method (100) according to any one of the preceding claims,
**characterized in that**
a localization occurs by means of a distance measurement, in particular signal strength measurement, on the basis of the data transmission (D) at different receiving nodes (210) of the vehicle (1), in particular on the basis of the measured distance of the respective receiving nodes (210) from the access device (10), wherein the results of the distance measurement are compared with one another for localization.

12. Security method (100) according to any one of the preceding claims,
**characterized in that**
the data transmission (D) occurs via a public advertising and/or broadcast mode, in particular of a Bluetooth communication technology, so that the transmitted data units and/or user data, in particular also the security feature (60), can be publicly evaluated and/or read, preferably by all the receiving nodes (210) of the vehicle (1).

13. Security system (200) for a vehicle (1) for activating at least one security-relevant function on the vehicle (1) by means of at least one data transmission (D) between a portable access device (10) and the vehicle (1), comprising:
- at least one receiving node (210) on the vehicle (1), which is designed to receive at least one data unit (50) by the data transmission (D),
- at least one processing device (220) which is designed to check the received data unit (50) in order to associate the data unit (50) to the access device (10) on the vehicle side,
wherein the check is carried out on the basis of a security feature (60) of the data unit (50), and the security-relevant function can be activated depending on the check, wherein the data unit (50) comprises user data information (70), and the data unit (50) can be associated to the access device (10) on the vehicle side on the basis of the user data information (70), wherein the security feature (60) can be determined on the basis of the user data information (70) for cryptographic protection of this association in order to sign the user data information (70), wherein the security feature (60) is designed as an electronic signature.

14. Security system (200) according to claim 13,
**characterized in that**
at least one first receiving node (210a) is provided at the vehicle rear and/or at least one second receiving node (210b) is provided in a door handle (2) of the vehicle (1) and/or at least one third receiving node (210c) is provided in the vehicle interior and/or at least one fourth receiving node (210d) is provided in the front region of the vehicle (1), so that, depending on a distance between the access device (10) and the respective receiving nodes (210), a localization of the access device (10) can occur on the basis of the data transmission (D)
and/or the processing device (220) is configured to perform a security method (100) according to any one of claims 1 to 12.

## Revendications

1. Procédé de sécurité (100) pour un système de sécurité (200) d'un véhicule (1), pour l'activation d'au moins une fonction de sécurité sur le véhicule (1) au moyen d'au moins une transmission de données (D) entre un dispositif d'accès portable (10) et le véhicule (1),
**caractérisé par les étapes suivantes** :
a) la détermination d'au moins un critère de sécurité (60) selon un mécanisme de sécurité prédéterminé,
b) l'exécution de la transmission des données (D) de manière à ce qu'au moins une unité de données (50) avec au moins le critère de sécurité (60) soit transmise du dispositif d'accès (10) au véhicule (1),
c) la vérification de l'unité de données transmise (50) en utilisant le critère de sécurité transmis (60) selon le mécanisme de sécurité pour associer l'unité de données (50) du côté du véhicule au dispositif d'accès (10) afin de déterminer un résultat de vérification,
d) l'activation de la fonction de sécurité en fonction au moins du résultat de la vérification, dans lequel
l'unité de données (50) comprend une information de données d'utilisateur (70) et l'unité de données (50) est associée au dispositif d'accès (10) du côté du véhicule sur la base d'information de données d'utilisateur (70), le critère de sécurité (60) étant déterminé conformément à l'étape a) sur la base d'information de données d'utilisateur (70) afin de signer l'information de données d'utilisateur (70) pour la protection cryptographique de cette association, le critère de sécurité (60) étant conçu comme une signature électronique.

2. Procédé de sécurité (100) selon la revendication 1,
**caractérisé en ce que**
la transmission de données (D) s'effectue sans connexion par une technologie de communication radio, en particulier par Bluetooth ou Bluetooth Low Energy, de préférence par un canal de communication non protégé cryptographiquement, de sorte que la protection cryptographique est essentiellement assurée par le critère de sécurité (60) et/ou le mécanisme de sécurité.

3. Procédé de sécurité (100) selon la revendication 1 ou 2,
**caractérisé en ce que**
l'activation de la fonction de sécurité selon l'étape d) a lieu en fonction au moins du résultat de la vérification et d'une intensité de signal lors de la transmission de l'unité de données (50), une distance entre le dispositif d'accès (10) et le véhicule (1) étant de préférence déterminée sur la base de l'intensité de signal, et la fonction de sécurité n'étant activée que si la distance est suffisamment faible.

4. Procédé de sécurité (100) selon l'une des revendications précédentes,
**caractérisé en ce que**
l'information de données d'utilisateur (70) comprend au moins une information (70) spécifique au dispositif, en particulier une adresse de dispositif du dispositif d'accès (10), de préférence une adresse de dispositif Bluetooth, le critère de sécurité (60) étant déterminée selon l'étape a) sur la base de l'information (70) spécifique au dispositif, de sorte que, de préférence selon l'étape c), l'authentification de l'information (70) spécifique au dispositif et/ou l'association de l'unité de données (50) au dispositif d'accès (10) est effectuée sur la base de l'information (70) spécifique au dispositif.

5. Procédé de sécurité (100) selon l'une des revendications précédentes,
**caractérisé en ce que**
l'activation selon l'étape d) est effectuée en fonction d'une localisation du dispositif d'accès (10) sur la base d'une information de distance concernant une distance du dispositif d'accès (10) par rapport au véhicule (1), au moins les étapes suivantes étant prévues avant l'étape d) :
- la signature numérique d'une information de données d'utilisateur (70) pour l'unité de données (50), de sorte que de préférence une signature numérique est calculée comme un critère de sécurité (60) pour l'unité de données (50), en particulier par le dispositif d'accès (10),
- la transmission de l'unité de données (50), l'information de données d'utilisateur (70) et le critère de sécurité (60) étant transmis en tant que données d'utilisateur de l'unité de données (50) du dispositif d'accès (10) au véhicule (1), en particulier conformément à l'étape b), de préférence l'ensemble des données d'utilisateur et/ou l'information de données d'utilisateur (70) de l'unité de données (50) étant transmises en clair,
- la détermination d'information de distance, en particulier sur la base de la transmission de données (D), de préférence sur la base d'une mesure de l'intensité de signal pendant la transmission de données (D), de préférence par le véhicule (1),
où, de préférence, conformément à l'étape c), l'information de données d'utilisateur (70) et/ou l'information de distance sont vérifiées, en particulier authentifiées, sur la base du critère de sécurité (60).

6. Procédé de sécurité (100) selon l'une des revendications précédentes,
**caractérisé en ce que**
à l'étape c), le critère de sécurité (60) et/ou l'information de données d'utilisateur (70) sont vérifiés de manière cryptographique, de préférence au moyen d'au moins une spécification de vérification du mécanisme de sécurité, de préférence au moyen d'un algorithme de vérification et/ou d'une clé de vérification.

7. Procédé de sécurité (100) selon l'une des revendications précédentes,
**caractérisé en ce que**
conformément à l'étape c), un résultat de vérification positif est déterminé si l'authenticité du dispositif d'accès (10) et/ou l'intégrité de l'unité de données (50) est établie avec succès sur la base du critère de sécurité transmis (60), dans lequel, à l'étape d), l'activation n'a lieu que si le résultat de vérification est positif.

8. Procédé de sécurité (100) selon l'une des revendications précédentes,
**caractérisé en ce que**
l'unité de données (50), au moins au niveau du transport, est transmise en clair et comprend donc au moins une information de commande et/ou de protocole non cryptée et/ou des données d'utilisateur au moins partiellement non cryptées, en particulier au moins avec l'information de données d'utilisateur (70) non cryptée, l'unité de données (50) étant de préférence réalisée sous la forme d'un paquet de données (50) et les données d'utilisateur comprenant de préférence au moins le critère de sécurité (60) non crypté.

9. Procédé de sécurité (100) selon l'une des revendications précédentes,
**caractérisé en ce que**
le mécanisme de sécurité comprend au moins un procédé cryptographique afin de déterminer de préférence au moins une association, en particulier une authenticité, de l'unité de données (50), le procédé cryptographique étant de préférence un procédé de signature numérique et/ou étant effectué sur la base d'au moins une valeur aléatoire et/ou de codes roulants
et/ou **en ce que** le critère de sécurité (60) et/ou l'information de données d'utilisateur (70) sont spécifiques au dispositif d'accès (10), en particulier **en ce que** le critère de sécurité (60) et/ou l'information de données d'utilisateur (70) sont déterminées directement ou indirectement sur la base de l'information (70) spécifique au dispositif, en particulier un identificateur de dispositif, de préférence une clé de résolution d'identité, du dispositif d'accès (10).

10. Procédé de sécurité (100) selon l'une des revendications précédentes,
**caractérisé en ce qu'**
au moins deux ou trois ou plusieurs noeuds de réception (210) du véhicule (1) sont prévus pour recevoir respectivement la au moins une unité de données (50) et/ou pour effectuer la transmission de données (D), le dispositif d'accès (10) étant localisé en fonction de la réception et/ou de la transmission de données (D) des noeuds de réception (210) et/ou un contrôle de l'intégrité des unités de données (50) respectivement reçues, et la au moins une fonction de sécurité étant activée en fonction de la localisation.

11. Procédé de sécurité (100) selon l'une des revendications précédentes,
**caractérisé en ce que**
la localisation s'effectue au moyen d'une mesure de distance, en particulier d'une mesure de l'intensité de signal, sur la base de la transmission de données (D) à différents noeuds de réception (210) du véhicule (1), en particulier sur la base de la distance mesurée entre les noeuds de réception respectifs (210) et le dispositif d'accès (10), les résultats de la mesure de distance étant comparés entre eux pour la localisation.

12. Procédé de sécurité (100) selon l'une des revendications précédentes,
**caractérisé en ce que**
la transmission de données (D) a lieu par le biais d'un mode de publicité publique et/ou de diffusion, en particulier d'une technologie de communication Bluetooth, de sorte que les unités de données et/ou les données d'utilisateur transmises, en particulier également le critère de sécurité (60), peuvent être évaluées et/ou lues publiquement, de préférence par tous les noeuds de réception (210) du véhicule (1).

13. Système de sécurité (200) pour un véhicule (1) pour l'activation d'au moins une fonction de sécurité sur le véhicule (1) au moyen d'au moins une transmission de données (D) entre un dispositif d'accès portable (10) et le véhicule (1), comprenant :
- au moins un noeud de réception (210) sur le véhicule (1) adapté pour recevoir au moins une unité de données (50) par la transmission de données (D),
- au moins un dispositif de traitement (220) adapté pour le contrôle de l'unité de données reçue (50) afin d'associer l'unité de données (50) du côté du véhicule au dispositif d'accès (10),
le contrôle est effectué sur la base d'un critère de sécurité (60) de l'unité de données (50) et la fonction de sécurité peut être activée en fonction du contrôle, dans lequel l'unité de données (50) comprend une information de données d'utilisateur (70) et l'unité de données (50) peut être associée au dispositif d'accès (10) du côté du véhicule sur la base d'information de données d'utilisateur (70), le critère de sécurité (60) pouvant être déterminé sur la base d'information de données d'utilisateur (70) afin de signer l'information de données d'utilisateur (70) pour la protection cryptographique de cette association, le critère de sécurité (60) étant conçu comme une signature électronique.

14. Système de sécurité (200) selon la revendication 13,
**caractérisé en ce qu'**
au moins un premier noeud de réception (210a) est prévu à l'arrière du véhicule et/ou au moins un deuxième noeud de réception (210b) est prévu dans une poignée de porte (2) du véhicule (1) et/ou au moins un troisième noeud de réception (210c) est prévu dans l'habitacle du véhicule et/ou au moins un quatrième noeud de réception (210d) est prévu dans la zone avant du véhicule (1), de sorte que, en fonction d'une distance entre le dispositif d'accès (10) et les noeuds de réception (210) respectifs, une localisation du dispositif d'accès (10) peut avoir lieu sur la base de la transmission de données (D) et/ou que le dispositif de traitement (220) est adapté pour effectuer un procédé de sécurité (100) selon l'une des revendications 1 à 12.
